# EUROPÄISCHE PATENTANMELDUNG

(11) **EP 1 263 007 A1**
(43) Veröffentlichungstag der Anmeldung: **04.12.2002**
(21) Anmeldenummer: 02010312.3
(22) Anmeldetag: 07.05.2002
(51) Int. Cl.: H01G 2/08

(54) **Elektrischer Kondensator**

(30) Priorität: 18.05.2001 DE 10124435
(71) Anmelder: ROBERT BOSCH GMBH, 70442 Stuttgart (DE)
(72) Erfinder: Paesler, Thomas, 71067 Sindelfingen (DE); Beulich, Klaus, 74343 Sachsenheim (DE)

(57) **Zusammenfassung**

Es wird ein elektrischer Kondensator mit einem Gehäuse (14), das einen elektrische Anschlußfahnen (11, 12) aufweisenden Kondensatorkörper (13) umschließt, angegeben, bei dem zum Zwecke einer optimierten Abführung der im Kondensatorkörper (13) erzeugten Verlustwärme das Gehäuse (14) von einem Kühlflüssigkeitsmantel (15) umgeben ist, der zwischen dem Gehäuse (14) und einer das Gehäuse (14) umgebenden Hülle (16) eingeschlossen ist. Die Hülle (16) ist mit einem Zulaufstutzen (17) und einem Ablaufstutzen (18) für die Kühlflüssigkeit versehen.

## Beschreibung

### Stand der Technik

Die Erfindung geht aus von einem elektrischen Kondensator nach dem Oberbegriff des Anspruchs 1.

Elektrische Kondensatoren werden häufig zur Glättung der Welligkeit von Gleichströmen verwendet, die z.B. bei elektronisch kommutierten Leistungsmotoren oder Wechsel- und Umrichtern auftritt. Dabei fällt in dem Kondensator eine nicht unerheblich Verlustleistung an, die zu einer starken Erwärmung des Kondensators führt. Wird die Verlustwärme nicht ausreichend abgeführt, so führt dies zu einer Zerstörung des Kondensators oder zumindest zu einer Reduzierung seiner Lebensdauer. Man ist daher bemüht, bei solchen Kondensatoren die Wärmeabfuhr zu intensivieren.

Bei einem bekannten elektrischen Kondensator dieser Art (EP 0 780 855 A2) weist hierzu das Gehäuse eine zylindrische Außenwand und eine dazu koaxiale zylindrische Innenwand auf.

Außen- und Innenwand schließen zwischen sich eine Ringkammer ein, während die zylindrische Innenwand einen zentralen Hohlraum begrenzt. Bodenseitig ist die Ringkammer verschlossen und der Hohlraum offen. Der als Ringkörper ausgeführte Kondensatorkörper ist in der Ringkammer aufgenommen, und das Gehäuse ist auf der vom Boden abgekehrten Stirnseite mit einem Deckel verschlossen. Der Deckel trägt zwei elektrische Anschlüsse für den Kondensator, die mit dem Kondensatorkörper kontaktiert sind. Durch das Vorhandensein des zentralen Hohlraums wird die Oberfläche des Gehäuses vergrößert, was das Abführen der Verlustwärme begünstigt. Der Hohlraum erzwingt außerdem infolge Konvektion einen Zwangsfluß von dem Kondensator zugeführter Kühlflüssigkeit, die über die inneren Zylinderwand des Gehäuses Wärme vom Kondensatorkörper aufnimmt und aus dem Hohlraum abtransportiert.

### Vorteile der Erfindung

Der erfindungsgemäße elektrische Kondensator mit den Merkmalen des Anspruchs 1 hat den Vorteil, daß durch den das Gehäuse außen umgebenden Kühlflüssigkeitsmantel eine große Kühlfläche geschaffen wird, über die die Verlustwärme direkt in die Kühlflüssigkeit übergeht und mit dieser abgeführt wird. Damit kann der Kondensator auch in Umgebungen betrieben werden, in denen herkömmliche Kühltechniken versagen, und der Kühlflüssigkeitsmantel bildet zugleich einen Schutz gegen Umgebungseinflüsse. Da die Wärmebeanspruchung des Kondensatorkörpers sinkt, erhöht sich die Lebensdauer des Kondensators. Wird Wasser als Kühlflüssigkeit verwendet, kann der Kondensator auch bei relativ hohen Wassertemperaturen noch gekühlt werden, da der thermische Widerstand des üblicherweise aus Aluminium hergestellten Gehäuses zum Wasser sehr klein ist. Der erfindungsgemäße Kühlmantel erfordert keinerlei Beschränkung in der Baugröße des Kondensators, so daß anders als bei dem eingangs beschriebenen bekannten Kondensator auch kleine Durchmesser realisiert werden können. Der erfindungsgemäße Kondensator erfordert keine Sonderbauform des Kondensatorkörpers, sondern greift auf standardisierte Gehäuseformen mit integrierten Kondensatorkörpern zurück.

Durch die in den weiteren Ansprüchen aufgeführten Maßnahmen sind vorteilhafte Weiterbildungen und Verbesserungen des im Anspruch 1 angegebenen elektrischen Kondensators möglich.

Gemäß einer vorteilhaften Ausführungsform der Erfindung ist die Hülle zum Aufbau des Kühlwassermantels als Topf mit Topfboden, zylindrischer Topfwand und Topföffnung ausgebildet und das den Kondensatorkörper enthaltende Gehäuse mit radialem Abstand zur Topfwand in die Hülle eingesetzt und nahe der Topföffnung gegenüber der Topfwand abgedichtet.

Der Radialabstand zwischen Gehäuse und Topfwand wird dabei gemäß einer vorteilhaften Ausführungsform der Erfindung durch Ringstege sichergestellt, die in Umfangsrichtung voneinander beabstandet von der Innenfläche der Topfwand abstehen und an denen sich das Gehäuse radial abstützt. Durch diese konstruktiven Maßnahmen kann eine einheitliche, standardisierte Hülle für alle Baugrößen des Gehäuses mit Kondensatorkörper vorgehalten werden, wobei lediglich die Ringstege an die unterschiedlichen Gehäusedurchmesser angepaßt werden müssen. Die Ringstege stabilisieren darüber hinaus das Gehäuse gegen äußere Schwingbeanspruchungen. Die Abdichtung zwischen Topfwand und Gehäuse, die gemäß einer vorteilhaften Ausführungsform der Erfindung als Ringdichtung ausgeführt wird, hält die Kühlflüssigkeit von den elektrischen Anschlußfahnen des Kondensatorkörpers fern, die über die Topföffnung vorstehen.

### Zeichnung

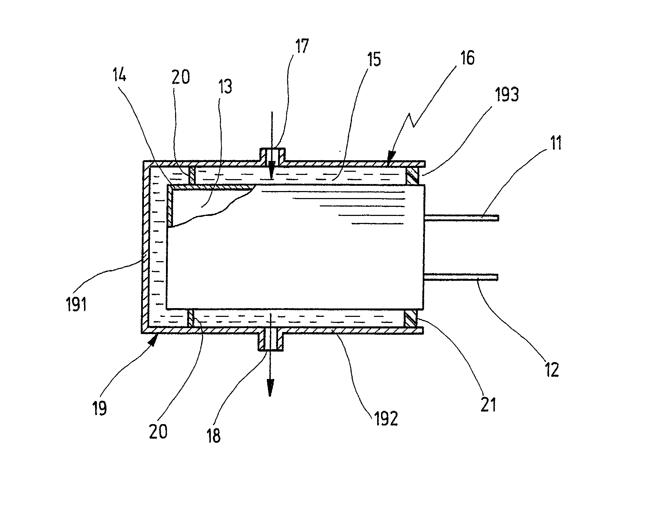

Die Erfindung ist anhand eines in der Zeichnung dargestellten Ausführungsbeispiels in der nachfolgenden Beschreibung näher erläutert. Dabei zeigt die Zeichnung einen Längsschnitt eines elektrischen Kondensators.

### Beschreibung des Ausführungsbeispiels

Der in der Zeichnung im Längsschnitt dargestellte elektrische Kondensator, der vorzugsweise als Elektrolytkondensator ausgeführt ist, weist einen mit zwei elektrischen Anschlußfahnen 11, 12 versehenen Kondensatorkörper 13, der von einem Gehäuse 14 aus Aluminium fest umschlossen ist, sowie einen das Gehäuse 14 umgebenden Kühlflüssigkeitsmantel 15 auf, der zwischen dem Gehäuse 14 und einer das Gehäuse 14 umgebenden Hülle 16 eingeschlossen ist. Als Kühlflüssigkeit wird vorzugsweise Wasser verwendet, das über einen in der Hülle 16 angeordneten Zulaufstutzen 17 und einen in der Hülle 16 angeordneten Ablaufstutzen 18 kontinuierlich ausgetauscht werden kann.

Im Ausführungsbeispiel ist die Hülle 16 als Topf 19 mit Topfboden 191, zylindrischer Topfwand 192 und Topföffnung 193 ausgebildet, und das den Kondensatorkörper 13 umschließende Gehäuse 14 ist zur Realisierung des Kühlflüssigkeitsmantels 15 mit radialem Abstand zur Topfwand 192 und mit axialem Abstand zum Topfboden 191 in den Topf 19 eingesetzt und nahe der Topföffnung 193 gegenüber der Topfwand 192 abgedichtet. Der radiale Abstand des Gehäuses 14 von der Topfwand 192 ist dabei durch Stege 20 festgelegt, die an der Innenfläche der Topfwand 192 in Umfangsrichtung voneinander beabstandet von der Topfwand 192 radial abstehend angeordnet sind und an denen sich das Gehäuse 14 radial abstützt. Die Abdichtung an der Topföffnung 193 ist mittels einer Ringdichtung 21 vorgenommen, die einerseits an der Innenfläche der Topfwand 192 und andererseits an der Außenfläche des Gehäuses 14 flüssigkeitsdicht anliegt. Die Anschlußfahnen 11, 12 stehen dabei über die Topföffnung 193 vor, so daß eine problemlose Kontaktierung der Anschlußfahnen 11, 12 gewährleistet ist. Zu- und Ablaufstutzen 17, 18 sind vorteilhaft in der Topfwand 192 zueinander diametral angeordnet und durchdringen diese.

## Patentansprüche

1. Elektrischer Kondensator mit einem elektrische Anschlußfahnen (11, 12) aufweisenden Kondensatorkörper (13) und einem den Kondensatorkörper (13) umschließenden Gehäuse (14), dem zum Abführen von im Kondensatorkörper (13) erzeugter Verlustwärme eine Kühlflüssigkeit zuführbar ist, **dadurch gekennzeichnet, daß** das Gehäuse (14) von einem Kühlflüssigkeitsmantel (15) umgeben ist, der zwischen dem Gehäuse (14) und einer das Gehäuse (14) umgebenden Hülle (16) eingeschlossen ist, und daß die Hülle (16) mit einem Zulaufstutzen (17) und einem Ablaufstutzen (18) für die Kühlflüssigkeit versehen ist.

2. Kondensator nach Anspruch 1, **dadurch gekennzeichnet, daß** die Hülle (16) als Topf (19) mit Topfboden (191), Topfwand (192) und Topföffnung (193) ausgebildet ist und daß das den Kondensatorkörper (13) enthaltende Gehäuse (14) mit radialem Abstand zur Topfwand (192) in den Topf (19) eingesetzt und nahe der Topföffnung (193) gegenüber der Topfwand (192) abgedichtet ist.

3. Kondensator nach Anspruch 2, **dadurch gekennzeichnet, daß** das Gehäuse (14) mit axialem Abstand zum Topfboden (191) im Topf (19) angeordnet ist.

4. Kondensator nach Anspruch 2 oder 3, **dadurch gekennzeichnet, daß** von der Innenflächen der Topfwand (192) das Gehäuse (14) abstützende Stege (20) radial abstehen, die in Umfangsrichtung voneinander beabstandet angeordnet sind.

5. Kondensator nach einem der Ansprüche 2 - 4, **dadurch gekennzeichnet, daß** die Abdichtung zwischen Gehäuse (14) und Topfwand (192) mittels einer Ringdichtung (21) vorgenommen ist.

6. Kondensator nach einem der Ansprüche 2 - 5, **dadurch gekennzeichnet, daß** Zu- und Ablaufstutzen (17, 18) die Topfwand (192) durchdringen.

7. Kondensator nach Anspruch 6, **dadurch gekennzeichnet, daß** Zu- und Ablaufstutzen (17, 18) zueinander diametral angeordnet sind.

8. Kondensator nach einem der Ansprüche 2 - 7, **dadurch gekennzeichnet, daß** die Anschlußfahnen (11, 12) des Kondensatorkörpers (13) über die Topföffnung (193) vorstehen.
